(19) Europäisches Patentamt / European Patent Office / Office européen des brevets

(11) **EP 4 575 436 A1**

(12) **EUROPEAN PATENT APPLICATION**
published in accordance with Art. 153(4) EPC

(43) Date of publication:
**25.06.2025 Bulletin 2025/26**

(21) Application number: **23854815.0**

(22) Date of filing: **04.08.2023**

(51) International Patent Classification (IPC):
**G01L 1/00** (2006.01)    **G01L 25/00** (2006.01)

(52) Cooperative Patent Classification (CPC):
**G01L 1/00; G01L 25/00**

(86) International application number:
**PCT/JP2023/028618**

(87) International publication number:
**WO 2024/038780 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.08.2022 JP 2022129432**

(71) Applicant: **FUJIFILM Corporation**
**Tokyo 106-8620 (JP)**

(72) Inventor: **YAMAZAKI, Yoshiro**
**Tokyo 106-8620 (JP)**

(74) Representative: **Meissner Bolte Partnerschaft mbB**
**Patentanwälte Rechtsanwälte**
**Postfach 86 06 24**
**81633 München (DE)**

(54) **INFORMATION PROCESSING DEVICE, INFORMATION PROCESSING METHOD, AND INFORMATION PROCESSING PROGRAM**

(57)    Provided is an information processing apparatus including at least one processor, in which the processor is configured to: acquire a color forming member image obtained by imaging a color forming member, which forms a color with density distribution corresponding to an amount of energy applied thereto; derive first energy distribution applied to the color forming member based on the color forming member image by using characteristic data in which a relationship between the amount of energy applied to the color forming member and density of the color forming member included in the color forming member image is determined in advance; acquire second energy distribution obtained from an electric signal that is output from a sensor device in a case where the same energy as the energy applied to the color forming member is applied to the sensor device, the sensor device outputting the electric signal in accordance with an amount of energy applied thereto; and correct the second energy distribution based on the first energy distribution.

## FIG. 5

**Description**

Technical Field

The present disclosure relates to an information processing apparatus, an information processing method, and an information processing program.

Background Art

In the related art, various techniques of measuring energy (for example, pressure, heat, and the like) applied to a surface are known.

First, a technique of measuring the amount of energy by using a color forming member that forms a color in accordance with the amount of energy in a case where energy is applied thereto is known. Examples of such a color forming member include PRESCALE (registered trademark) (manufactured by FUJIFILM Corporation) with which a color formation density corresponding to applied pressure can be obtained. For example, described in WO2021/235364A is a technique in which a pressure measurement sheet (for example, PRESCALE) is imaged after being displaced on a calibration sheet, the density, the size, the distortion, and the shape of a captured image are corrected based on the calibration sheet included in the captured image, and a density value of the pressure measurement sheet included in an image after the correction is converted into a pressure value.

Secondly, a sensor device that outputs an electric signal corresponding to pressure, heat (temperature), and the like by means of a sensor element that detects pressure, heat, and the like is known. For example, disclosed in JP2020-123119A is a sensor device including a sensing unit that is disposed on a substrate and that includes a sensor element detecting at least one of pressure or temperature and a storage unit that stores calibration data of the sensor element.

SUMMARY OF INVENTION

Meanwhile, in the case of a sensor device (refer to JP2020-123119A) that outputs an electric signal corresponding to pressure, heat, and the like, energy distribution may not be accurately obtained due to a variation in sensitivity of each sensor element, hysteresis characteristics, and the like. Therefore, there is a demand for a technique with which it is possible to support appropriate measurement performed by means of a sensor device.

The present disclosure provides an information processing apparatus, an information processing method, and an information processing program that support appropriate measurement.

According to a first aspect of the present disclosure, there is provided an information processing apparatus comprising at least one processor. The processor is configured to: acquire a color forming member image obtained by imaging a color forming member, which forms a color with density distribution corresponding to an amount of energy applied thereto; derive first energy distribution applied to the color forming member based on the color forming member image by using characteristic data in which a relationship between the amount of energy applied to the color forming member and density of the color forming member included in the color forming member image is determined in advance; acquire second energy distribution obtained from an electric signal that is output from a sensor device in a case where the same energy as the energy applied to the color forming member is applied to the sensor device, the sensor device outputting the electric signal in accordance with an amount of energy applied thereto; and correct the second energy distribution based on the first energy distribution.

According to a second aspect of the present disclosure, in the information processing apparatus according to the first aspect, the processor may be configured to correct the second energy distribution by using a method of making the second energy distribution coincide with the first energy distribution at least partially.

According to a third aspect of the present disclosure, in the information processing apparatus according to the first or second aspect, the sensor device may include a plurality of sensor elements each of which detect an amount of energy applied thereto, and the processor may be configured to derive a correction coefficient for each sensor element based on the first energy distribution and correct the second energy distribution by using the correction coefficient.

According to a fourth aspect of the present disclosure, in the information processing apparatus according to any one of the first to third aspects, the processor may be configured to perform the acquisition of the color forming member image, the derivation of the first energy distribution, the acquisition of the second energy distribution, and the correction of the second energy distribution again each time a predetermined period of time elapses.

According to a fifth aspect of the present disclosure, in the information processing apparatus according to any one of the first to fourth aspects, the processor may be configured to perform the acquisition of the color forming member image, the derivation of the first energy distribution, the acquisition of the second energy distribution, and the correction of the second energy distribution again each time the sensor device is used a predetermined number of times.

According to a sixth aspect of the present disclosure, there is provided an information processing method comprising processing of acquiring a color forming member image obtained by imaging a color forming member, which forms a color with density distribution corresponding to an amount of energy applied thereto, deriving first energy distribution applied to the color forming member based on the color forming member image by using characteristic data in which a relationship between the amount of energy applied to the color forming member and density of the color forming member included in the color forming member image is determined in advance, acquiring second energy distribution obtained by applying, to a sensor device that outputs an electric signal in accordance with an amount of energy applied thereto, the same energy as the energy applied to the color forming member, and correcting the second energy distribution based on the first energy distribution.

According to a seventh aspect of the present disclosure, there is provided an information processing program causing a computer to execute processing of acquiring a color forming member image obtained by imaging a color forming member, which forms a color with density distribution corresponding to an amount of energy applied thereto, deriving first energy distribution applied to the color forming member based on the color forming member image by using characteristic data in which a relationship between the amount of energy applied to the color forming member and density of the color forming member included in the color forming member image is determined in advance, acquiring second energy distribution obtained by applying, to a sensor device that outputs an electric signal in accordance with an amount of energy applied thereto, the same energy as the energy applied to the color forming member, and correcting the second energy distribution based on the first energy distribution.

According to the aspects, the information processing apparatus, the information processing method, and the information processing program of the present disclosure provide support for appropriate measurement.

BRIEF DESCRIPTION OF DRAWINGS

Fig. 1 is a diagram showing an example of a schematic configuration of an information processing system.
Fig. 2 is a view showing a schematic configuration of a tactile sensor.
Fig. 3 is a block diagram showing an example of a hardware configuration of an information processing apparatus.
Fig. 4 is a diagram showing an example of characteristic data.
Fig. 5 is a block diagram showing an example of a functional configuration of the information processing apparatus.
Fig. 6 is a diagram showing an example of first pressure distribution and second pressure distribution.
Fig. 7 is a diagram showing an example of pressure values of the first pressure distribution and the second pressure distribution and a correction coefficient for each set of coordinates.
Fig. 8 is a diagram showing an example of a screen displayed on a display.
Fig. 9 is a flowchart showing an example of information processing.

DESCRIPTION OF EMBODIMENTS

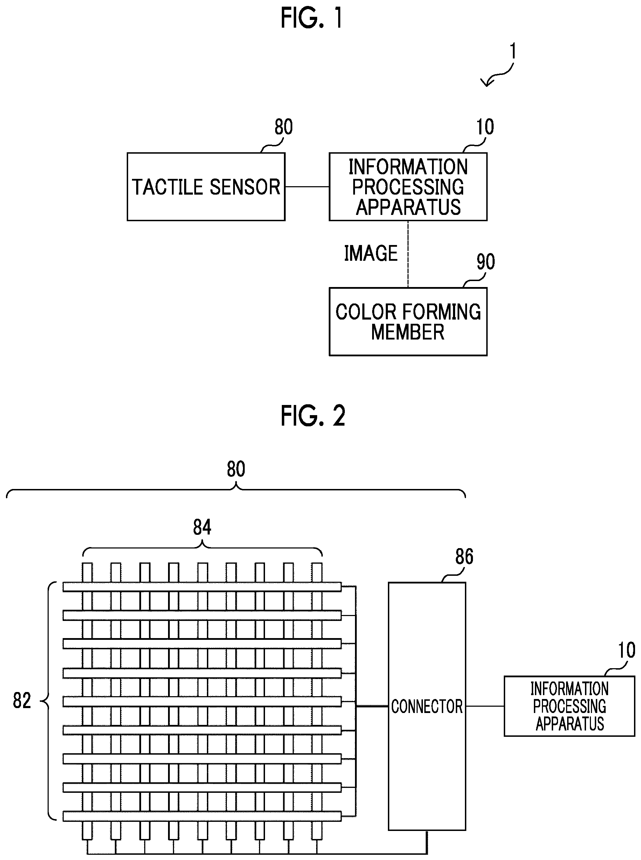

Hereinafter, an exemplary embodiment of the present disclosure will be described with reference to the drawings. First, a configuration of an information processing system 1 to which an information processing apparatus 10 according to the embodiment of the present disclosure is applied will be described with reference to Fig. 1. Fig. 1 is a diagram showing a schematic configuration of the information processing system 1. The information processing system 1 includes the information processing apparatus 10 and a tactile sensor 80.

The tactile sensor 80 is an example of a sensor device that outputs an electric signal in accordance with pressure applied thereto. Fig. 2 is a view showing a schematic configuration of the tactile sensor 80. The tactile sensor 80 includes a plurality of first electrodes 82 extending in a first direction, a plurality of second electrodes 84 extending in a second direction intersecting the first direction, and a connector 86. The plurality of first electrodes 82 and the plurality of second electrodes 84 are disposed on a sheet-shaped substrate (not shown). In addition, pressure-sensitive members (not shown) are laminated on the plurality of first electrodes 82 and the plurality of second electrodes 84 to cover the first electrodes 82 and the second electrodes 84, respectively.

As shown in Fig. 2, the plurality of first electrodes 82 and the plurality of second electrodes 84 are arranged in a shape like a lattice as seen in a plan view and overlap with each other at intersections of the lattice. The first electrode 82 and the second electrode 84 that overlap with each other at each intersection constitute a sensor element that detects pressure applied to the position of the intersection. Specifically, in a case where pressure is applied to the tactile sensor 80, the state of contact between the first electrode 82 and the second electrode 84 at a position to which the pressure is applied is changed, which causes a change in electric resistance value. Therefore, it is possible to detect pressure applied to each sensor element by measuring the electrical resistance value of each sensor element. That is, the tactile sensor 80 includes a plurality of sensor elements each of which detects pressure applied thereto and the tactile sensor 80 detects pressure distribution by means of the plurality of sensor elements.

Each of the plurality of first electrodes 82 and the plurality of second electrodes 84 is connected to the connector 86. The connector 86 and the information processing apparatus 10 are connected to each other via wired or wireless communication. The connector 86 measures the electric resistance value of each sensor element by applying a voltage to the first electrodes 82 and the second electrodes 84 in order and transmits, to the information processing apparatus 10, an electric signal corresponding to the electric resistance value.

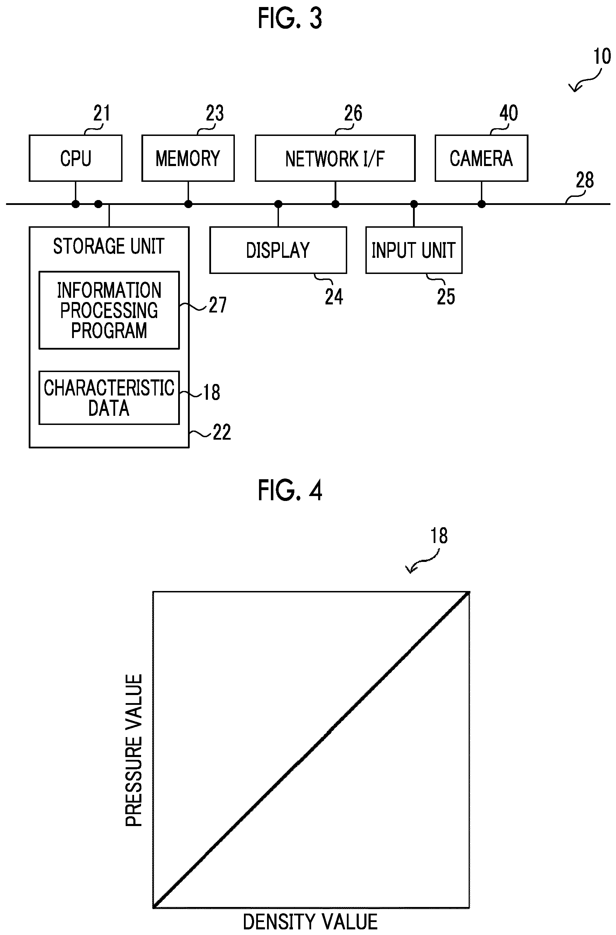

In addition, the information processing system 1 of the present exemplary embodiment measures the amount of energy by using a color forming member 90 that forms a color with density distribution corresponding to the amount of energy applied thereto in a case where energy (for example, pressure and heat) is applied thereto. Specifically, the information processing apparatus 10 images, by using a camera 40 (refer to Fig. 3), the color forming member 90 in a state where the color forming member 90 forms a color with energy applied thereto and the amount of energy applied to the color forming member 90 is derived from a captured image.

As the color forming member 90, it is possible to apply PRESCALE (registered trademark) (manufactured by FUJIFILM Corporation) with which a color formation density corresponding to applied pressure can be obtained. The PRESCALE is obtained by applying a color former including microcapsules in which colorless dye is included and a color developer to a sheet-shaped support. In a case where pressure is applied to the PRESCALE, the microcapsules are broken, the colorless dye is adsorbed to the color developer, and a color is formed. In addition, since the color former includes a plurality of kinds of microcapsules having different sizes and strengths, the number of microcapsules that are broken depends on pressure applied to the PRESCALE and color optical density also depends on pressure applied to the PRESCALE. Therefore, by observing the color optical density, the magnitude of the pressure applied to the PRESCALE, pressure distribution, and the like can be measured.

Meanwhile, in the case of the tactile sensor 80, pressure distribution may not be accurately obtained due to a variation in sensitivity of each sensor element, hysteresis characteristics, and the like. Therefore, in the information processing apparatus 10 according to the present exemplary embodiment, the same pressure is applied to the color forming member 90 and the tactile sensor 80 and pressure distribution measured by the tactile sensor 80 is corrected based on pressure distribution derived from an image obtained by imaging the color forming member 90. Hereinafter, the information processing apparatus 10 will be described in detail.

First, an example of a hardware configuration of the information processing apparatus 10 will be described with reference to Fig. 3. As shown in Fig. 3, the information processing apparatus 10 includes a central processing unit (CPU) 21, a non-volatile storage unit 22, and a memory 23 which is a temporary storage area. In addition, the information processing apparatus 10 includes a display 24, such as a liquid crystal display, an input unit 25, a network interface (I/F) 26, and the camera 40. The CPU 21, the storage unit 22, the memory 23, the display 24, the input unit 25, the network I/F 26, and the camera 40 are connected to each other via a bus 28 such as a system bus and a control bus so that various types of information can be exchanged therebetween.

The storage unit 22 is realized by, for example, a storage medium, such as a hard disk drive (HDD), a solid state drive (SSD), and a flash memory. An information processing program 27 in the information processing apparatus 10 and characteristic data 18 are stored in the storage unit 22. The CPU 21 reads out the information processing program 27 from the storage unit 22, loads the information processing program 27 into the memory 23, and executes the loaded information processing program 27. The CPU 21 is an example of a processor according to the embodiment of the present disclosure.

Fig. 4 shows an example of the characteristic data 18. The characteristic data 18 is data in which a relationship between the amount of energy (a pressure value) applied to the color forming member 90 and density of the color forming member 90 included in an image obtained by imaging the color forming member 90 is defined in advance. As the amount of energy, for example, a physical quantity corresponding to energy that can be measured by using the color forming member 90, such as a pressure value, can be applied as appropriate. Note that although a pressure value and a density value are proportional to each other in Fig. 4, the pressure value and the density value may not be proportional to each other.

The input unit 25 is for reception of an operation performed by a user, and is, for example, a touch panel, a button, a keyboard, a mouse, or the like. The network I/F 26 performs wired or wireless communication with the connector 86 of the tactile sensor 80 and other external devices (not shown). The camera 40 includes a sensor having a plurality of different spectral sensitivities, images a subject (the color forming member 90) by means of the sensor under the control of the CPU 21, and outputs an image signal of a captured image thereof. As the information processing apparatus 10, for example, a smartphone, a tablet terminal, a wearable terminal, a personal computer, or the like having a camera function can be applied as appropriate.

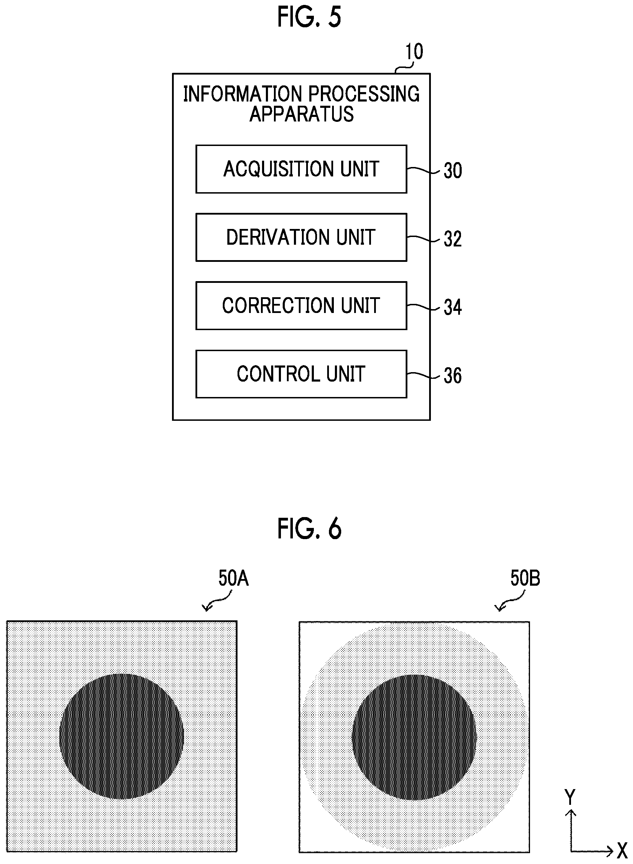

Next, an example of a functional configuration of the information processing apparatus 10 will be described with reference to Fig. 5. As shown in Fig. 5, the information processing apparatus 10 includes an acquisition unit 30, a derivation unit 32, a correction unit 34, and a control unit 36. With the CPU 21 executing the information processing program 27, the CPU 21 functions as each of functional units which are the acquisition unit 30, the derivation unit 32, the correction unit 34, and the control unit 36.

Hereinafter, it will be assumed that pressure is applied in a state where the color forming member 90 and the tactile sensor 80 overlap with each other so that the same pressure is applied to each of the color forming member 90 and the tactile sensor 80. Here, the term "same" means being substantially equal, and for example, a pressure difference that may be caused due to the color forming member 90 and the tactile sensor 80 overlapping with each other is allowable.

The acquisition unit 30 acquires an image (hereinafter, referred to as a "color forming member image") obtained by imaging the color forming member 90 with the camera 40. Note that in a case where the color forming member image includes a region other than the color forming member 90 (for example, a background region), the acquisition unit 30 may extract a region of the color forming member 90.

Based on the color forming member image acquired by the acquisition unit 30, the derivation unit 32 derives first pressure distribution 50A applied to the color forming member 90 by using the characteristic data 18. Specifically, the derivation unit 32 converts a density value into a pressure value (the amount of energy) by using the characteristic data 18 for each pixel of the color forming member image, so that pressure distribution (energy distribution) is derived.

In addition, the acquisition unit 30 acquires, from the tactile sensor 80 via the network I/F 26, second pressure distribution 50B which is obtained from an electric signal output from the tactile sensor 80. Here, as described above, the same pressure (energy) as pressure (energy) applied to the color forming member 90 is applied to the tactile sensor 80. That is, the first pressure distribution 50A derived from the color forming member image and the second pressure distribution 50B, which is an output of the tactile sensor 80, are expected to coincide with each other as long as the tactile sensor 80 is accurate.

However, in the case of the tactile sensor 80, pressure distribution may not be accurately obtained due to a variation in sensitivity of each sensor element, hysteresis characteristics, and the like. Fig. 6 shows examples of the first pressure distribution 50A derived from the color forming member image and the second pressure distribution 50B which is the output of the tactile sensor 80. The second pressure distribution 50B in Fig. 6 indicates that a peripheral edge portion has not been appropriately measured in comparison with the first pressure distribution 50A.

Therefore, the correction unit 34 corrects the second pressure distribution 50B, which is the output of the tactile sensor 80, based on the first pressure distribution 50A derived from the color forming member image. Specifically, the correction unit 34 corrects the second pressure distribution 50B by using a method of making the second pressure distribution 50B coincide with the first pressure distribution 50A at least partially.

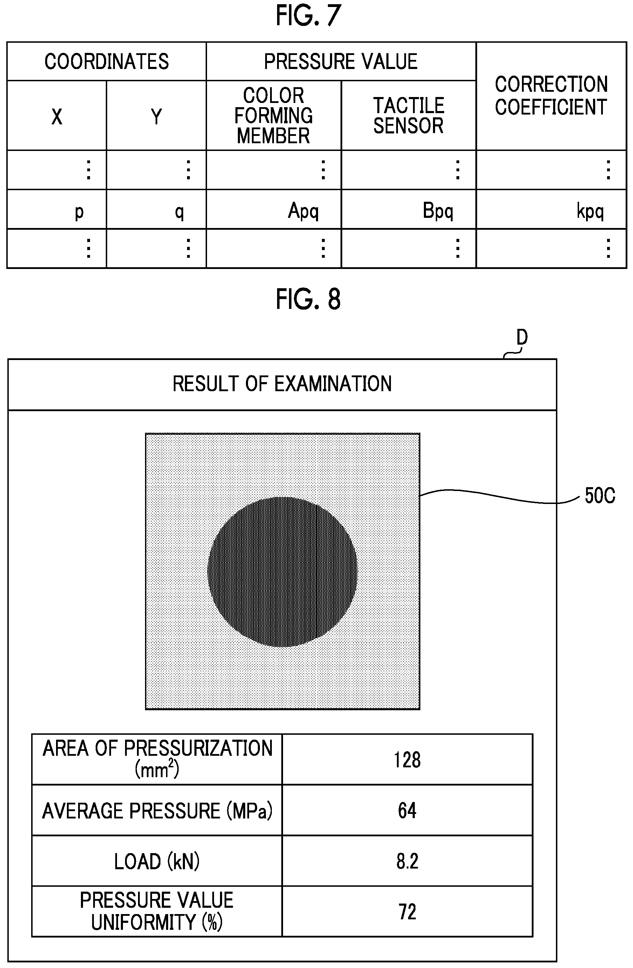

An example of a method of correcting the second pressure distribution 50B will be described with reference to Fig. 7. The correction unit 34 may perform registration of the first pressure distribution 50A and the second pressure distribution 50B and then derive a correction coefficient for each set of coordinates (more specifically, for each sensor element) such that pressure values at the same set of coordinates substantially coincide with each other. Fig. 7 shows an example of each of pressure values at the same sets of coordinates and correction coefficients related to a case where the first pressure distribution 50A and the second pressure distribution 50B are represented by means of the X-Y coordinates system. As shown in Fig. 7, it will be assumed that a pressure value of the first pressure distribution 50A (a column of "color forming member") at a set of coordinates (p, q) is Apq, and a pressure value of the second pressure distribution 50B (a column of "tactile sensor") at the same set of coordinates (p, q) is Bpq. In this case, a correction coefficient kpq at the set of coordinates (p, q) is as the following formula.

$$kpq = Apq/Bpq$$

The correction unit 34 derives correction coefficients for respective sets of coordinates and stores the correction coefficients for the respective sets of coordinates in the storage unit 22. In addition, the correction unit 34 corrects the second pressure distribution 50B by using the derived correction coefficients. Specifically, the correction unit 34 derives, based on the following formula, a pressure value Cpq of a second pressure distribution 50C after the correction at the set of coordinates (p, q).

$$Cpq = kpq \times Bpq$$

In addition, in a case where third pressure distribution, which is other pressure distribution, is acquired from the tactile sensor 80 after the derivation of the correction coefficients, the correction unit 34 may correct the third pressure distribution by using the correction coefficients derived based on the first pressure distribution 50A and the second pressure distribution 50B. The third pressure distribution may not be the same as pressure applied to the color forming member 90. Specifically, in a case where a pressure value of the third pressure distribution at the set of coordinates (p, q) is Dpq, the correction unit 34 derives a pressure value Epq of the third pressure distribution after the correction at the set of coordinates (p, q) based on the following formula.

$$Epq = kpq \times Dpq$$

In addition, the derivation unit 32 may derive various indicators related to energy distribution. Examples of the various indicators include representative values such as the maximum value, the minimum value, the average value, and the median of the amount of energy. In addition, examples of the various indicators include the area of a region (hereinafter, will be referred to as an "application region") to which energy is applied, the proportion of the area of a portion of the application region in which the amount of energy falls within a predetermined range, the uniformity in amount of applied energy, a load (the product of the area of the application region and the average value of the amount of energy) at the application region, and the like. In addition, in a case where a reference for the amount of energy and energy distribution is determined in advance, examples of the various indicators include the rate of match or the rate of deviation with respect to the reference.

The control unit 36 performs control such that at least one of the second pressure distribution 50C after the correction or various indicators related to the second pressure distribution 50C after the correction is displayed on the display 24. In addition, the control unit 36 may provide notification indicating that the second pressure distribution 50B has been corrected based on the first pressure distribution 50A. As a means for providing the notification, for example, a known method in which the notification is displayed on the display 24, a sound from a speaker (not shown) is used, or a lamp (not shown) is turned on and off can be applied as appropriate.

Fig. 8 shows an example of a screen D displayed on the display 24 by the control unit 36. The screen D includes the second pressure distribution 50C after the correction and various indicators related to pressure distribution derived from the second pressure distribution 50C after the correction. Regarding the second pressure distribution 50C after the correction which is shown in Fig. 8, a peripheral portion has been appropriately corrected in comparison with the second pressure distribution 50B before the correction which is shown in Fig. 6, so that the second pressure distribution 50C approximately coincides with the first pressure distribution 50A. The "area of pressurization" on the screen D means the area of the application region. The "average pressure" means the average value of pressure values in the application region. The "load" means the product of the area of application and the average pressure. The "pressure value uniformity" means the pressure value uniformity in the application region.

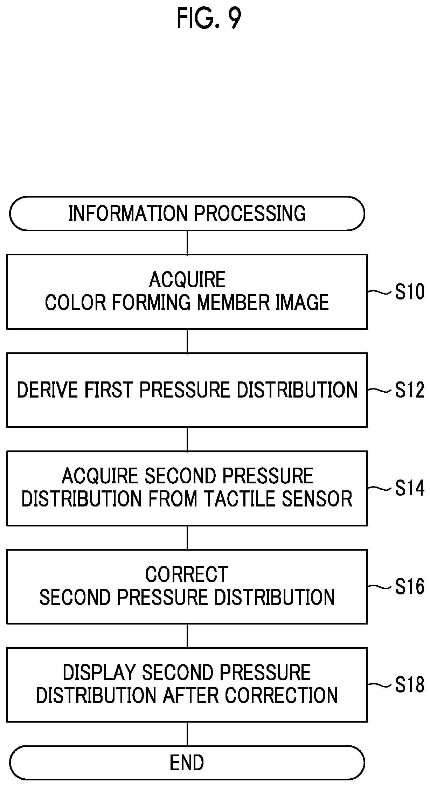

Next, the action of the information processing apparatus 10 according to the present exemplary embodiment will be described with reference to Fig. 9. In the information processing apparatus 10, the CPU 21 executes the information processing program 27 so that information processing shown in Fig. 9 is executed. The information processing is executed, for example, in a case where a user gives an instruction to start execution via the input unit 25. Hereinafter, it will be assumed that pressure is applied in a state where the color forming member 90 and the tactile sensor 80 overlap with each other so that the same pressure is applied to each of the color forming member 90 and the tactile sensor 80.

In step S10, the acquisition unit 30 acquires a color forming member image obtained by imaging the color forming member 90 with the camera 40. In step S12, the derivation unit 32 derives the first pressure distribution 50A applied to the color forming member 90 by using the characteristic data 18, based on the color forming member image acquired in step S10. In step S14, the acquisition unit 30 acquires the second pressure distribution 50B which is obtained from an electric signal output from the tactile sensor 80.

In step S16, the correction unit 34 corrects the second pressure distribution 50B acquired in step S14 based on the first pressure distribution 50A derived in step S12. In step S18, the control unit 36 performs control such that the second pressure distribution 50C after the correction, which is corrected in step S16, is displayed on the display 24 and the information processing ends.

As described above, the information processing apparatus 10 according to an aspect of the present disclosure includes at least one processor, and the processor is configured to: acquire a color forming member image obtained by imaging the color forming member 90, which forms a color with density distribution corresponding to the amount of energy applied thereto; derive first energy distribution applied to the color forming member 90 based on the color forming member image by using the characteristic data 18 in which a relationship between the amount of energy applied to the color forming member 90 and the density of the color forming member 90 included in the color forming member image is determined in advance; acquire second energy distribution obtained from an electric signal that is output from a sensor device in a case where the same energy as the energy applied to the color forming member 90 is applied to the sensor device, the sensor device outputting the electric signal in accordance with the amount of energy applied thereto; and correct the second energy distribution based on the first energy distribution.

That is, with the information processing apparatus 10, the second pressure distribution 50B can be corrected based on the first pressure distribution 50A derived from the color forming member image even in a case where the second pressure distribution 50B acquired from the tactile sensor 80 is not accurate. Therefore, it is possible to support appropriate measurement performed by means of a sensor device such as the tactile sensor 80.

Note that although an embodiment in which the tactile sensor 80 that outputs an electric signal in accordance with pressure applied thereto is used as an example of the sensor device has been described in the above-described exemplary embodiment, the present disclosure is not limited thereto. As the sensor device, for example, a temperature-sensitive sensor (refer to, for example, JP2016-118552A) that outputs an electric signal in accordance with whether the temperature is high or low may also be applied. That is, as the sensor device, a sensor device that includes a plurality of sensor elements, which respectively detect the amounts of various kinds of energy applied thereto, and that outputs an electric signal in accordance with the amounts of various kinds of energy applied thereto can be applied as appropriate. In addition, in a case where the temperature-sensitive sensor is applied as the sensor device, THERMOSCALE (a product name) (manufactured by FUJIFILM Corporation) which forms a color corresponding to the amount of heat or the like can be applied as the color forming member 90.

In addition, as described above, the tactile sensor 80 may have hysteresis characteristics. That is, the accuracy of output pressure distribution may change each time the tactile sensor 80 is used. Therefore, for example, in the information processing apparatus 10, acquisition of a color forming member image which is performed by the acquisition unit 30, derivation of first energy distribution (the first pressure distribution 50A) which is performed by the derivation unit 32, acquisition of second pressure distribution (the second pressure distribution 50B) which is performed by the acquisition unit 30, and correction of the second pressure distribution, which is performed by the correction unit 34, may be performed again each time a predetermined period of time elapses (for example, every other day). In addition, for example, in the information processing apparatus 10, each of the above-described processes may be performed again each time the tactile sensor 80 is used a predetermined number of times (for example, ten times).

In addition, although an embodiment in which the information processing apparatus 10 includes the camera 40 has been described in the above-described exemplary embodiment, the present disclosure is not limited thereto. For example, an embodiment in which the color forming member 90 is imaged by an imaging device such as an external digital camera or a scanner and a captured image is acquired by the information processing apparatus 10 may also be adopted. In this case, the information processing apparatus 10 may not include the camera 40.

In addition, in the above-described exemplary embodiment, for example, various processors as follows can be used as the hardware structure of a processing unit that executes various kinds of processing, such as the acquisition unit 30, the derivation unit 32, the correction unit 34, and the control unit 36. As described above, the various processors include a programmable logic device (PLD) as a processor of which the circuit configuration can be changed after manufacture, such as a field programmable gate array (FPGA), a dedicated electrical circuit as a processor having a dedicated circuit configuration for executing specific processing such as an application specific integrated circuit (ASIC), and the like, in addition to the CPU as a general-purpose processor that functions as various processing units by executing software (program).

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example of the plurality of processing units composed of one processor, first, the present disclosure includes an aspect in which one processor is composed of a combination of one or more CPUs and software, and the processor functions as the plurality of processing units, as represented by a computer such as a client and a server. Second, the present disclosure includes an aspect of using a processor that implements functions of the entire system including the plurality of processing units in one integrated circuit (IC) chip, as represented by a system on chip (SoC). As described above, various processing units are configured by using one or more of the above-described various processors as the hardware structure.

Furthermore, more specifically, an electric circuit (circuitry) in which circuit elements such as semiconductor elements are combined can be used as the hardware structure of the various processors.

In the above exemplary embodiment, the information processing program 27 is described as being stored (installed) in the storage unit 22 in advance; however, the present disclosure is not limited thereto. The information processing program 27 may be provided in the form of a recording on a recording medium such as a compact disc read only memory (CD-ROM), a digital versatile disc read only memory (DVD-ROM), and a universal serial bus (USB) memory. In addition, the information processing program 27 may be configured to be downloaded from an external device via a network. Furthermore, in addition to the information processing program, the present disclosed technology is applied to a storage medium that stores the information processing program in a non-transitory manner.

In the present disclosed technology, the above-described exemplary embodiment and an example can be appropriately combined with each other. Contents described and shown above are for detailed description of a part according to the present disclosed technology and are merely an example of the present disclosed technology. For example, description of the above-described configurations, functions, actions, and effects is description related to an example of configurations, functions, actions, and effects of parts related to the present disclosed technology. Therefore, it is needless to say that unnecessary parts may be deleted, or new elements may be added or replaced with respect to the above-described contents and illustrated contents within a scope not departing from the spirit of the present disclosed technology.

The disclosure of JP2022-129432 filed on August 15, 2022 in Japan is incorporated in the present specification by reference in its entirety. All documents, patent applications, and technical standards described in the present specification are incorporated in the present specification by reference to the same extent as in a case where the individual documents, patent applications, and technical standards are specifically and individually stated to be incorporated by reference.

## Claims

1. An information processing apparatus comprising at least one processor, wherein the processor is configured to:

   acquire a color forming member image obtained by imaging a color forming member, which forms a color with density distribution corresponding to an amount of energy applied thereto;
   derive first energy distribution applied to the color forming member based on the color forming member image by using characteristic data in which a relationship between the amount of energy applied to the color forming member and density of the color forming member included in the color forming member image is determined in advance;
   acquire second energy distribution obtained from an electric signal that is output from a sensor device in a case where the same energy as the energy applied to the color forming member is applied to the sensor device, the sensor device outputting the electric signal in accordance with an amount of energy applied thereto; and
   correct the second energy distribution based on the first energy distribution.

2. The information processing apparatus according to 1, wherein the processor is configured to correct the second energy distribution by using a method of making the second energy distribution coincide with the first energy distribution at least partially.

3. The information processing apparatus according to 1, wherein:

   the sensor device includes a plurality of sensor elements each of which detect an amount of energy applied thereto, and
   the processor is configured to:

   derive a correction coefficient for each sensor element based on the first energy distribution; and
   correct the second energy distribution by using the correction coefficient.

4. The information processing apparatus according to 1, wherein the processor is configured to perform the acquisition of the color forming member image, the derivation of the first energy distribution, the acquisition of the second energy distribution, and the correction of the second energy distribution again each time a predetermined period of time elapses.

5. The information processing apparatus according to 1, wherein the processor is configured to perform the acquisition of the color forming member image, the derivation of the first energy distribution, the acquisition of the second energy distribution, and the correction of the second energy distribution again each time the sensor device is used a predetermined number of times.

6. An information processing method comprising processing of:

   acquiring a color forming member image obtained by imaging a color forming member, which forms a color with density distribution corresponding to an amount of energy applied thereto;
   deriving first energy distribution applied to the color forming member based on the color forming member image by using characteristic data in which a relationship between the amount of energy applied to the color forming member and density of the color forming member included in the color forming member image is determined in advance;
   acquiring second energy distribution obtained by applying, to a sensor device that outputs an electric signal in accordance with an amount of energy applied thereto, the same energy as the energy applied to the color forming member; and
   correcting the second energy distribution based on the first energy distribution.

7. An information processing program causing a computer to execute processing of:

   acquiring a color forming member image obtained by imaging a color forming member, which forms a color with density distribution corresponding to an amount of energy applied thereto;
   deriving first energy distribution applied to the color forming member based on the color forming member image by using characteristic data in which a relationship between the amount of energy applied to the color forming member and density of the color forming member included in the color forming member image is determined in advance;
   acquiring second energy distribution obtained by applying, to a sensor device that outputs an electric signal in accordance with an amount of energy applied thereto, the same energy as the energy applied to the color forming member; and
   correcting the second energy distribution based on the first energy distribution.

FIG. 1

FIG. 2

# FIG. 3

# FIG. 4

# FIG. 5

10

INFORMATION PROCESSING
APPARATUS

| ACQUISITION UNIT | 30 |

| DERIVATION UNIT | 32 |

| CORRECTION UNIT | 34 |

| CONTROL UNIT | 36 |

# FIG. 6

50A                                          50B

Y
↑
└→X

## FIG. 7

| COORDINATES | | PRESSURE VALUE | | CORRECTION COEFFICIENT |
|---|---|---|---|---|
| X | Y | COLOR FORMING MEMBER | TACTILE SENSOR | |
| ⋮ | ⋮ | ⋮ | ⋮ | ⋮ |
| p | q | Apq | Bpq | kpq |
| ⋮ | ⋮ | ⋮ | ⋮ | ⋮ |

## FIG. 8

D

RESULT OF EXAMINATION

50C

| AREA OF PRESSURIZATION (mm$^2$) | 128 |
|---|---|
| AVERAGE PRESSURE (MPa) | 64 |
| LOAD (kN) | 8.2 |
| PRESSURE VALUE UNIFORMITY (%) | 72 |

# FIG. 9

```
        ┌──────────────────────────────────┐
        │      INFORMATION PROCESSING       │
        └──────────────────────────────────┘
                         │
        ┌──────────────────────────────────┐
        │            ACQUIRE               │ ～ S10
        │   COLOR FORMING MEMBER IMAGE      │
        └──────────────────────────────────┘
                         │
        ┌──────────────────────────────────┐
        │  DERIVE FIRST PRESSURE DISTRIBUTION│ ～ S12
        └──────────────────────────────────┘
                         │
        ┌──────────────────────────────────┐
        │      ACQUIRE SECOND PRESSURE      │ ～ S14
        │  DISTRIBUTION FROM TACTILE SENSOR │
        └──────────────────────────────────┘
                         │
        ┌──────────────────────────────────┐
        │            CORRECT               │ ～ S16
        │    SECOND PRESSURE DISTRIBUTION   │
        └──────────────────────────────────┘
                         │
        ┌──────────────────────────────────┐
        │      DISPLAY SECOND PRESSURE      │ ～ S18
        │  DISTRIBUTION AFTER CORRECTION    │
        └──────────────────────────────────┘
                         │
        ┌──────────────────────────────────┐
        │               END                │
        └──────────────────────────────────┘
```

## INTERNATIONAL SEARCH REPORT

| International application No. |
| --- |
| **PCT/JP2023/028618** |

**A.    CLASSIFICATION OF SUBJECT MATTER**

*G01L 1/00*(2006.01)i; *G01L 25/00*(2006.01)i
FI:    G01L1/00 G; G01L1/00 E; G01L25/00 B

According to International Patent Classification (IPC) or to both national classification and IPC

**B.    FIELDS SEARCHED**

Minimum documentation searched (classification system followed by classification symbols)

G01L1/00; G01L5/00; G01L25/00; G01J1/00-G01J11/00;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-112783 A (PANASONIC INTELLECTUAL PROPERTY MANAGEMENT CO., LTD.) 27 July 2020 (2020-07-27)<br>    paragraphs [0009]-[0117], fig. 1-17 | 1-7 |
| A | JP 2019-106527 A (SAMSUNG DISPLAY CO., LTD.) 27 June 2019 (2019-06-27)<br>    paragraphs [0033]-[0101], fig. 1-5 | 1-7 |
| A | US 2017/0224764 A1 (CORNELL UNIVERSITY) 10 August 2017 (2017-08-10)<br>    paragraphs [0339]-[0344], fig. 9, 10 | 1-7 |
| A | CN 112378576 A (NORTHWESTERN POLYTECHNICAL UNIVERSITY) 19 February 2021 (2021-02-19)<br>    paragraphs [0034]-[0084], fig. 1, 2 | 1-7 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 August 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/028618**

| Patent document cited in search report | | | Publication date (day/month/year) | Patent family member(s) | Publication date (day/month/year) |
|---|---|---|---|---|---|
| JP | 2020-112783 | A | 27 July 2020 | (Family: none) | |
| JP | 2019-106527 | A | 27 June 2019 | KR 10-2019-0071850 A | |
| US | 2017/0224764 | A1 | 10 August 2017 | (Family: none) | |
| CN | 112378576 | A | 19 February 2021 | (Family: none) | |

Form PCT/ISA/210 (patent family annex) (January 2015)

## EP 4 575 436 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021235364 A
- JP 2020123119 A
- JP 2016118552 A
- JP 2022129432 A